# EUROPÄISCHE PATENTSCHRIFT

(11) **EP 1 089 583 B1**
(45) Veröffentlichungstag und Bekanntmachung des Hinweises auf die Patenterteilung: **04.08.2004**
(21) Anmeldenummer: 00250328.2
(22) Anmeldetag: 29.09.2000
(51) Int. Cl.: H04Q 7/38, H04Q 7/30

(54) **Anordnung mit mindestens zwei Mobilfunk-Basisstationen und Verfahren zu deren Betrieb**
Arrangement with at least two mobile radio base stations and method for controlling the operation thereof
Dispositif comprenant au moins deux stations de base radio-mobile et procédé de commande correspondant

(30) Priorität: 30.09.1999 DE 19948699
(43) Veröffentlichungstag der Anmeldung: 04.04.2001
(73) Patentinhaber: SIEMENS AKTIENGESELLSCHAFT, 80333 München (DE)
(72) Erfinder: Antonov, Iavor, Dr., 10117 Berlin (DE); Koenemann, Dirk, 24161 Altenholz (DE); Dummann, Uwe, 16341 Zepernick (DE)

(56) Entgegenhaltungen:
- US-A- 5 305 466
- US-A- 5 732 350
- WEINMILLER, J.: "Evaluation of handover schemes for Local Area Mobility Management" 5TH INTERNATIONAL WORKSHOP ON MOBILE MULTIMEDIA COMMUNICATION - MOMUC'98, 12. - 14. Oktober 1998, XP002185804 Berlin, Germany

## Beschreibung

Die Erfindung bezieht sich auf eine Anordnung mit mindestens zwei ortsfesten, an ein Telekommunikationsnetz angeschlossenen Mobilfunk-Basisstationen, die zur Sprachund/oder Datenübertragung mit allen denjenigen Mobilfunk-Endgeräten - nachfolgend Mobilteile genannt - bereit sind, deren Zugangsberechtigung geprüft und als richtig erkannt ist, wobei jede der Mobilfunk-Basisstationen zum Prüfen der Zugangsberechtigung jeweils eine einen Speicher enthaltende Steuereinrichtung aufweist.

Eine derartige Anordnung läßt sich dem Prospekt "Die Freiheit, die uns verbindet. Gigaset 2000" (Bestellnr. A31001-W20-A64/V3) entnehmen, in dem sog. schnurlose (englisch: cordless) Telefone beschrieben sind. Schnurlose Telefone bestehen aus zwei Komponenten, nämlich aus einer Mobilfunk-Basisstation, die an ein Telekommunikationsnetz angeschlossen wird, und aus einem oder mehreren mobilen Endgeräten - auch Mobilteile genannt -, die mit der Mobilfunk-Basisstation über Funk, beispielsweise im DECT-Standard, kommunizieren. Um sicherzustellen, daß die Mobilfunk-Basisstation des schnurlosen Telefons ausschließlich mit solchen Mobilteilen kommuniziert, die vom Telefon-Eigentümer bzw. vom Telefon-Nutzer des schnurlosen Telefons zugelassen und angemeldet worden sind, sind in einem Speicher der Mobilfunk-Basisstation die Zugangsberechtigungen aller zuvor zugelassenen Mobilteile abgespeichert.

Ferner ist aus einem Bericht "Evaluation of Handover Schemes for Local Area Mobility Management" von J. Weinmiller aus "Proceedings of 5^{th} International Workshop on Mobile Multimedia Communication-Momuc '98, Berlin, Germany (12-10-1998) eine Architektur eines erweiterten WLNA ansatzweise aufgezeigt. Hier werden mehrere Basisstationen verschiedener Zellen geringen Durchmessers mit einer zentralen Einheit ("distribution medium") verbunden. Neben den Basisstationen sind auch weitere von den Basisstationen gemeinsam genutzte Geräte, wie Drucker o. ä. an diese zentrale Einheit angeschlossen. Eine genaue Struktur dieser zentralen Einheit wird nicht offenbart.

Der Erfindung liegt die Aufgabe zugrunde, eine Anordnung der eingangs beschriebenen Art dahingehend fortzuentwickeln, daß auf einfache Art für jedes mit den Mobilfunk-Basisstationen in Verbindung stehende Mobilteil ein insgesamt größerer Sende-/Empfangsbereich gebildet wird als dies bisher der Fall ist. Diese Aufgabe wird bei einer Anordnung der eingangs beschriebenen Art erfindungsgemäß dadurch gelöst, daß die Anordnung ein Datenverarbeitungsgerätenetzwerk aufweist, das durch mehrere untereinander mit Daten- und/oder Signalleitungen verbundene Datenverarbeitungsgeräte gebildet ist, und daß die mindestens zwei Mobilfunk-Basisstationen jeweils an das Datenverarbeitungsgerätenetzwerk angeschlossen sind, wobei die Steuereinrichtungen derart ausgestaltet sind, daß sie unter Benutzung der Daten- und/oder Signalleitungen des Datenverarbeitungsgerätenetzwerks die in ihrem jeweiligen Speicher abgespeicherten Zugangsberechtigungs-Datensignale den Steuereinrichtungen der übrigen Mobilfunk-Basisstationen zum Auswerten zur Verfügung stellen und auf Zugangsberechtigungs-Datensignale der übrigen Mobilfunk-Basisstationen zugreifen und die Sprach- und/oder Datenübertragung der eigenen Mobilfunk-Basisstation jeweils mit jedem Mobilteil zulassen, dessen Kennung als Zugangsberechtigungs-Datensignal in dem eigenen Speicher oder in mindestens einem der Speicher der übrigen Mobilfunk-Basisstationen hinterlegt ist. Unter dem Begriff "Mobilfunk-Endgerät" bzw. Mobilteil werden dabei alle Arten von mobilen Endgeräten verstanden, die mit einer entsprechenden Sende/Empfangseinrichtung zum Anschluß an eine Mobilfunk-Basisstation ausgestattet sind; beispielsweise also mobile Funktelefone, Fax-Geräte oder auch DV-Geräte wie Laptops oder Notebooks bzw. Komponenten für solche DV-Geräte wie Drucker, Scanner etc., sofern diese - wie bereits erläutert - eine entsprechende Sende-/Empfangseinrichtung zur Kommunikation mit einer Mobilfunk-Basisstation aufweisen. Das Datenverarbeitungsgerätenetzwerk kann beispielsweise durch mittels Ethernet verbundene Rechner (PC oder Workstation) gebildet sein.

Ein wesentlicher Vorteil der erfindungsgemäßen Anordnung besteht darin, daß bei einem Anschluß mehrerer Mobilfunk-Basisstationen (beispielsweise schnurloser Telefone) an ein Telekommunikationsnetz für jedes Mobilteil ein insgesamt sehr großer Sende- und Empfangsbereich gebildet wird; denn jedes Mobilteil ist in jedem der Sende- bzw. Empfangsbereiche der einzelnen Mobilfunk-Basisstationen sende- und empfangsberechtigt; dies ist bei der erfindungsgemäßen Anordnung konkret darauf zurückzuführen, daß ein Austausch der Zugangsberechtigungsdaten zwischen den einzelnen Mobilfunk-Basisstationen durchgeführt wird. Aufgrund dieses Austausches der Zugangsberechtigungsdaten wird also eine "Hand-over"- bzw. "Roaming"-Funktion möglich gemacht; unter dem Begriff Hand-over- bzw. Roaming-Funktion wird dabei verstanden, daß ein bei einer der Mobilfunk-Basisstationen angemeldetes bzw. zugangsberechtigtes Mobilteil automatisch auch bei allen übrigen an das Datenverarbeitungsgerätenetzwerk angeschlossenen Mobilfunk-Basisstationen zugangsberechtigt ist, sobald es den Sende/Empfangsbereich seiner jeweils zugewiesenen Mobilfunk-Basisstation verläßt und in den Sende-/Empfangsbereich einer anderen Mobilfunk-Basisstation gelangt. Der Austausch der Zugangsberechtigungsdaten für die Hand-over bzw. Roaming-Funktion wird bei der erfindungsgemäßen Anordnung konkret dadurch erreicht, daß jede Mobilfunk-Basisstation zum Prüfen der Zugangsberechtigung eine Steuereinrichtung aufweist, die die Sprach- und/oder Datenübertragung mit jedem Mobilteil zuläßt, dessen Kennung als Zugangsberechtigungs-Datensignal in dem eigenen Speicher oder in mindestens einem der Speicher der übrigen Mobilfunk-Basisstationen hinterlegt ist; der Zugriff auf die Zugangsberechtigungs-Datensignale der übrigen Mobilfunk-Basisstationen erfolgt dabei unter Benutzung der Daten- und/oder Signalleitungen des Datenverarbeitungsgerätenetzwerks. Ein weiterer wesentlicher Vorteil der erfindungsgemäßen Anordnung ist darin zu sehen, daß der Austausch der Zugangsberechtigungsdaten für die Roaming- bzw. Hand-over-Funktion realisiert wird, ohne daß hierfür eine zusätzliche, den Mobilfunk-Basisstationen übergeordnete Zentraleinheit erforderlich wäre, die die Zugangsberechtigungen aller angemeldeten zugelassenen Mobilteile im Rahmen einer "zentralen Datenbank" verwaltet; denn bei der erfindungsgemäßen Anordnung stellen sich die Mobilfunk-Basisstationen die in ihrem jeweiligen Speicher abgespeicherten Zugangsberechtigungs-Datensignale unter Benutzung der Daten- und/oder Signalleitungen des Datenverarbeitungsgerätenetzwerks direkt und unmittelbar zur Verfügung, so daß jede der Mobilfunk-Basisstationen durch entsprechende Anfragen an die übrigen Mobilfunk-Basisstationen auf alle abgespeicherten Zugangsberechtigungen zurückgreifen kann. Bei der erfindungsgemäßen Anordnung wird also die Funktion der "zentralen Datenbank" realisiert durch den Datenaustausch zwischen den Speichern der an das Datenverarbeitungsgerätenetzwerk angeschlossenen Mobilfunk-Basisstationen. Zusammengefaßt besteht also der Kern der Erfindung darin, daß jedes der Mobilteile mit jeder der Mobilfunk-Basisstationen kommunizieren kann, ohne dabei zuvor bei jeder der Mobilfunk-Basisstationen angemeldet worden zu sein; denn es reicht bei der erfindungsgemäßen Anordnung hierfür aus, daß jedes Mobilteil jeweils bei einer einzigen Mobilfunk-Basisstation angemeldet ist. Ein Anmelden jedes der Mobilteile bei jeder der Mobilfunk-Basisstationen von Hand" ist also bei der erfindungsgemäßen Anordnung nicht erforderlich.

Um sicherzustellen, daß jede Mobilfunk-Basisstation möglichst schnell prüfen kann, ob ein Mobilteil eine zugelassene Kennung aufweist, wird es als vorteilhaft angesehen, wenn die Steuereinrichtungen der Mobilfunk-Basisstationen derart ausgestaltet sind, daß sie die Zugangsberechtigungs-Datensignale über die Daten-und/oder Signalleitungen des Datenverarbeitungsgerätenetzwerks untereinander austauschen unter Bildung eines einheitlichen Zugangsberechtigungs-Datensatzes in jeder der Mobilfunk-Basisstationen; denn gemäß dieser Weiterbildung der erfindungsgemäßen Anordnung verfügt jede Mobilfunk-Basisstation nach erfolgtem Austausch der Zugangsberechtigungs-Datensignale über einen kompletten Zugangsberechtigungs-Datensatz, so daß sie - ohne die übrigen Mobilfunk-Basisstationen befragen zu müssen - darüber entscheiden kann, ob die Kennung des jeweiligen Mobilteils zu akzeptieren ist bzw. ob die Sprach- und/oder Datenübertragung stattfinden kann.

Bezüglich der Bildung des einheitlichen Zugangsberechtigungs-Datensatzes in jeder der Mobilfunk-Basisstationen wird es darüber hinaus als vorteilhaft angesehen, wenn die Steuereinrichtungen der Mobilfunk-Basisstationen derart ausgestaltet sind, daß sie die Zugangsberechtigungs-Datensignale in regelmäßigen zeitlichen Abständen austauschen. Unterschiede in den einzelnen Zugangsberechtigungs-Datensätzen können nämlich so einfach erkannt und eliminiert werden.

Gemäß einer anderen Variante der erfindungsgemäßen Anordnung wird es als vorteilhaft angesehen, wenn die Steuereinrichtungen der Mobilfunk-Basisstationen derart ausgestaltet sind, daß sie nach einem ersten erfolgten Datenaustausch weitere Zugangsberechtigungs-Datensignale ausschließlich dann austauschen, wenn eine Veränderung der Zugangsberechtigung aufgetreten ist. Bei dieser Variante werden also nach dem ersten Datenaustausch ausschließlich Veränderungen des Zugangsberechtigungs-Datensatzes übermittelt, wodurch erreicht wird, daß die Daten- und/oder Signalleitungen der Schnittstelle nur in Anspruch genommen werden, wenn dies auch tatsächlich erforderlich ist.

Als vorteilhaft wird es darüber hinaus angesehen, wenn die Steuereinrichtungen der Mobilfunk-Basisstationen derart ausgestaltet sind, daß sie die in ihrem jeweiligen Speicher hinterlegten Zugangsberechtigungs-Datensignale ausschließlich auf Anfrage anderer Mobilfunk-Basisstationen an diese weiterleiten; diese Anordnung läßt sich besonders vorteilhaft dann einsetzen, wenn die Hand-over- bzw. Roaming-Funktion sehr selten genutzt wird und ein ständiges "Parathalten" des gesamten aktuellen Zugangsberechtigungs-Datensatzes nicht erforderlich ist. Ein weiterer Vorteil dieser Weiterbildung ist darin zu sehen, daß der Speicherplatz des Speichers der Steuereinrichtungen sehr klein sein kann, da ausschließlich die Zugangsberechtigungen der jeweils "eigenen" Mobilteile gespeichert werden müssen, also nicht die Zugangsberechtigungen aller zugelassenen Mobilteile.

Die Erfindung bezieht sich außerdem auf eine Mobilfunk-Basisstation zum Anschluß an ein Telekommunikationsnetz mit:
- mindestens einer Funkeinrichtung zur Sprach- und/oder Datenübertragung und
- mindestens einer die Funkeinrichtung ansteuernden und einen Speicher aufweisenden Steuereinrichtung, die die Sprach- und/oder Datenübertragung mit allen denjenigen Mobilteilen zuläßt, die eine in dem Speicher der Steuereinrichtung abgespeicherte Kennung aufweisen.

Eine derartige Mobilfunk-Basisstation ist aus dem oben genannten Prospekt zum Siemens-GIGASET-Telefon bekannt.

Bezüglich einer solchen Mobilfunk-Basisstation liegt der Erfindung die Aufgabe zugrunde, eine Mobilfunk-Basisstation anzugeben, mit der sich erreichen läßt, daß bei Anschluß mehrerer Mobilfunk-Basisstationen an ein Telekommunikationsnetz für jedes mit den Mobilfunk-Basisstationen in Verbindung stehende Mobilteil ein insgesamt größerer Sende-/Empfangsbereich gebildet wird als dies bisher der Fall ist.

Diese Aufgabe wird bei einer Mobilfunk-Basisstation der angegebenen Art erfindungsgemäß dadurch gelöst, daß die Mobilfunk-Basisstation einen Schnittstellenanschluß zum Anschluß an ein Datenverarbeitungsgerätenetzwerk aufweist und daß die Steuereinrichtung derart beschaffen ist, daß sie unter Benutzung der Daten- und/oder Signalleitungen des Datenverarbeitungsgerätenetzwerks einerseits die in ihrem Speicher abgespeicherten Zugangsberechtigungs-Datensignale anderen an das Datenverarbeitungsgerätenetzwerk angeschlossenen Mobilfunk-Basisstationen zur Verfügung stellt und andererseits auf Zugangsberechtigungs-Datensignale der anderen Mobilfunk-Basisstationen zugreift und die Sprachund/oder Datenübertragung jeweils zusätzlich auch mit jedem anderen Mobilteil zuläßt, dessen Zugangsberechtigung in mindestens einem Speicher der anderen Mobilfunk-Basisstationen abgespeichert ist.

Die Vorteile dieser erfindungsgemäßen Mobilfunk-Basisstation entsprechen denen der erfindungsgemäßen Anordnung, so daß diesbezüglich auf die obigen Ausführungen verwiesen wird. Das gleiche gilt für die Weiterbildungen der erfindungsgemäßen Mobilfunk-Basisstation (vgl. Ansprüche 7 bis 10), die in Unteransprüchen beschrieben sind.

Als erfinderisch wird ebenfalls ein Verfahren angesehen zum Betrieb einer Anordnung mit einem Telekommunikationsnetz, einem durch mehrere untereinander mit Daten- und/oder Signalleitungen verbundene Datenverarbeitungsgeräte gebildeten Datenverarbeitungsgerätenetzwerk und mindestens zwei ortsfesten Mobilfunk-Basisstationen, die jeweils an das Telekommunikationsnetz und an das Datenverarbeitungsgerätenetzwerk angeschlossen sind, wobei bei dem Verfahren jede Mobilfunk-Basisstation derart betrieben wird, daß sie unter Benutzung der Daten- und/oder Signalleitungen des Datenverarbeitungsgerätenetzwerks in ihrem jeweiligen Speicher abgespeicherte Zugangsberechtigungs-Datensignale den übrigen Mobilfunk-Basisstationen zum Auswerten zur Verfügung stellt und auf Zugangsberechtigungs-Datensignale der übrigen Mobilfunk-Basisstationen zugreift und daß sie die Sprach- und/oder Datenübertragung jeweils mit jedem Mobilteil zuläßt, dessen Zugangsberechtigung in dem eigenen Speicher oder in mindestens einem der Speicher der übrigen Mobilfunk-Basisstationen hinterlegt ist. Dieses Verfahren löst die bereits erwähnte Aufgabe, die darin besteht, daß bei Anschluß mehrerer Mobilfunk-Basisstationen an ein Telekommunikationsnetz für jedes mit den Mobilfunk-Basisstationen in Verbindung stehende Mobilteil ein insgesamt größerer Sende-/Empfangsbereich gebildet wird als dies bisher der Fall ist.

Vorteile dieses Verfahrens sowie die Vorteile von Weiterbildungen dieses Verfahrens (vgl. Ansprüche 11 bis 15) lassen sich den obigen Ausführungen entnehmen.

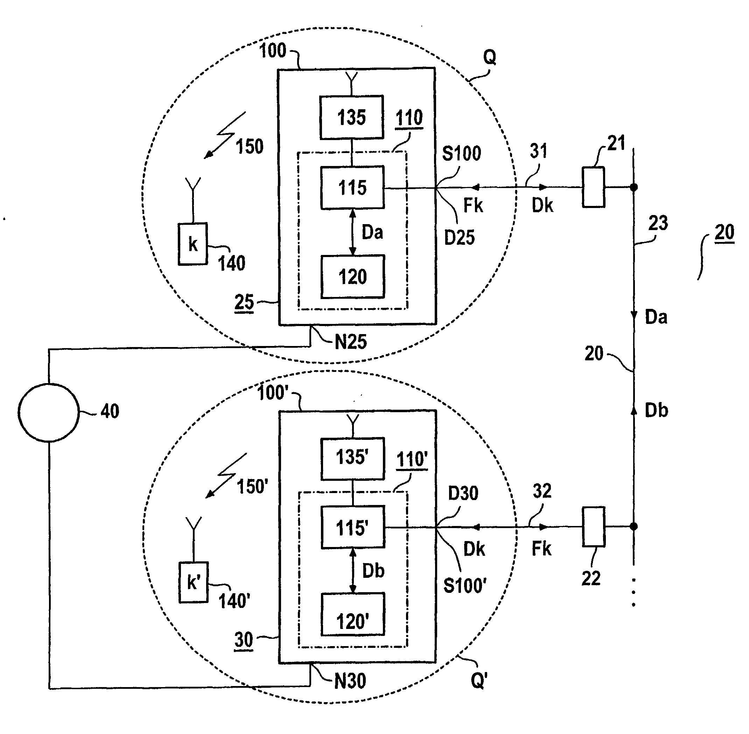

Zur Erläuterung der Erfindung zeigt eine Figur ein Ausführungsbeispiel für eine erfindungsgemäße Anordnung; die Anordnung gemäß der Figur beinhaltet ebenfalls ein Ausführungsbeispiel für eine erfindungsgemäße Mobilfunk-Basisstation. Die Anordnung gemäß der Figur ist darüber hinaus zur Durchführung des erfindungsgemäßen Verfahrens geeignet.

Die Figur zeigt ein Datenverarbeitungsgerätenetzwerk 20. Dieses Datenverarbeitungsgerätenetzwerk 20 besteht aus einem Datenverarbeitungs-Gerät 21, einem weiteren Datenverarbeitungs-Gerät 22 und zusätzlichen in der Figur der Übersicht halber nicht dargestellten DatenverarbeitungsGeräten sowie Daten und/oder Signalleitungen 23, die die Datenverarbeitungs-Geräte miteinander verbinden. Die Datenverarbeitungs-Geräte können beispielsweise PC's, Workstations, Laptops oder dergleichen sein; die Daten und/oder Signalleitungen 23 können gebildet sein durch ein Ethernet-Backbone, einen FDDI-Ring oder eine andere LAN(local area network)-Übertragungseinrichtung mit beliebiger Netztopologie. An das Datenverarbeitungsgerätenetzwerk 20 sind zwei schnurlose Telefone 25 und 30 angeschlossen; konkret ist das eine schnurlose Telefon 25 mit seinem Daten/Steuersignalanschluß D25 mittels einer Daten/Steuerleitung 31 an das eine Datenverarbeitungs-Gerät 21 und das weitere schnurlose Telefon 30 mit seinem Daten/Steuersignalanschluß D30 mittels einer weiteren Daten/Steuerleitung 32 an das weitere Datenverarbeitungs-Gerät 22 angeschlossen. Jedes der beiden schnurlosen Telefone 25 und 30 ist darüber hinaus jeweils an ein Telekommunikationsnetz 40 - beispielsweise ein ISDN-Netz - angeschlossen, und zwar das eine Telefon 25 mit seinem Telekommunikationsnetzanschluß N25 und das eine weitere Telefon 30 mit seinem Telekommunikationnetzsanschluß N30.

Das eine schnurlose Telefon 25 weist eine Mobilfunk-Basisstation 100 auf, deren Schnittstellenanschluß S100 den Daten/Steuersignalanschluß N25 des einen Telefons 25 bildet; dieser Schnittstellenanschluß S100 ist an das eine Datenverarbeitungs-Gerät 21 des Datenverarbeitungsgerätenetzwerks 20 angeschlossen. Die Mobilfunk-Basisstation 100 enthält eine mit dem Schnittstellenanschluß S100 verbundene Steuereinrichtung 110 mit einem Mikroprozessor 115 und einem damit verbundenen Speicher 120. Der Steuereinrichtung 110 ist eine Funkeinrichtung 135 zur Sprach- und/oder Datenübertragung mit Mobilteilen nachgeordnet; diese Funkeinrichtung 135 wird von der Steuereinrichtung 110 angesteuert. Mit der Funkeinrichtung 135 und damit mit der Mobilfunk-Basisstation 100 steht über Funk ein mobiles Telefon-Endgerät als Mobilteil 140 in Verbindung, das im Rahmen einer später erläuterten Anmeldeprozedur angemeldet worden ist; diese Funkverbindung ist in der Figur schematisch durch einen Pfeil 150 dargestellt. Bei der Funkverbindung kann es sich um eine Funkverbindung nach dem DECT-Standard, dem Bluetooth-Standard oder einem anderen geeigneten Standard handeln. Das schnurlose Telefon 25 wird also durch zwei Komponenten gebildet, nämlich der Mobilfunk-Basisstation 110 und dem Mobilteil 140.

Das weitere schnurlose Telefon 30 kann beispielsweise mit dem einen schnurlosen Telefon 25 identisch sein; dies bedeutet konkret, daß auch das weitere schnurlose Telefon 30 eine _{M}obilfunk-Basisstation aufweist- diese wird nachfolgend weitere Mobilfunk-Basisstation 100*'* genannt. Diese weitere Mobilfunk-Basisstation 100*'* ist über ihren Schnittstellenanschluß S100' an das weitere Datenverarbeitungs-Gerät 22 des Datenverarbeitungsgerätenetzwerks 20 angeschlossen. Die weitere Mobilfunk-Basisstation 100*'* enthält eine an das weitere Datenverarbeitungs-Gerät 22 angeschlossene, weitere Steuereinrichtung 110*'* mit einem weiteren Mikroprozessor 115*'* und einem weiteren Speicher 120*'*. Der weiteren Steuereinrichtung 110*'* ist eine weitere Funkeinrichtung 135*'* zur Sprach- und/oder Datenübertragung mit Mobilteilen nachgeordnet; diese weitere Funkeinrichtung 135*'* wird von der weiteren Steuereinrichtung 110*'* angesteuert. Mit der weiteren Mobilfunk-Basisstation 100*'* steht über Funk ein weiteres mobiles Endgerät als weiteres Mobilteil 140*'* in Verbindung, das im Rahmen einer vorab durchgeführten Anmeldeprozedur an die weitere Mobilfunk-Basisstation 100*'* angemeldet worden ist; diese Funkverbindung ist in der Figur schematisch durch einen Pfeil 150*'* dargestellt. Bei der Funkverbindung kann es sich ebenfalls um eine Funkverbindung nach dem DECT-Standard, dem Bluetooth-Standard oder einem anderen geeigneten Standard handeln. Das weitere schnurlose Telefon 30 wird also ebenfalls durch zwei Komponenten gebildet, nämlich der weiteren Mobilfunk-Basisstation 110*'* und dem weiteren Mobilteil 140*'*.

Die Anordnung gemäß der Figur läßt sich wie folgt betreiben:

### "Normalbetrieb":

Unter dem "Normalbetrieb" wird nachfolgend verstanden, daß jedes Mobilteil 140, 140*'* ausschließlich mit seiner zugeordneten Mobilfunk-Basisstation 100 bzw. 100*'* kommuniziert, also jeweils mit der Mobilfunk-Basisstation, an der es angemeldet ist. Wie sich eine solche Anmeldung von Mobilteilen an eine Mobilfunk-Basisstation bei im DECT-Standard arbeitenden schnurlosen Telefonen durchführen läßt, kann man beispielsweise dem Bedienungshandbuch zu dem eingangs genannten GIGASET-Telefon entnehmen. In dem Ausführungsbeispiel gemäß der Figur wird - wie bereits angesprochen - davon ausgegangen, daß das eine Mobilteil 140 bei der Mobilfunk-Basisstation 100 des einen schnurlosen Telefons 25 und das weitere Mobilteil 140*'* bei der Mobilfunk-Basisstation 100*'* des weiteren schnurlosen Telefons 30 angemeldet ist. Im Rahmen der jeweiligen Anmeldeprozedur werden von der Steuereinrichtung 110 bzw. 110*'* Zugangsberechtigungs-Datensignale Da bzw. Db erzeugt und in dem jeweiligen Speicher 120 bzw. 120 abgespeichert; diese Zugangsberechtigungs-Datensignale Da bzw. Db enthalten jeweils die Kennung K bzw. K*'* des zugelassenen bzw. angemeldeten Mobilteils 140 bzw. 140*'*. Bezogen auf die Figur heißt das, daß das Zugangsberechtigungs-Datensignal Da die Zugangsberechtigung für das Mobilteil 140 mit der Kennung K und das Zugangsberechtigungs-Datensignal Db die Zugangsberechtigung für das weitere Mobilteil 140*'* mit der Kennung K*'* enthält bzw. angibt.

Im folgenden soll nun beschrieben werden, was passiert, wenn beispielsweise das weitere Mobilteil 140*'* seinen in der Figur als Q*'* gekennzeichneten Sende-/Empfangsbereich bzw. den des weiteren schnurlosen Telefons 30 verläßt und in den mit dem Bezugszeichen Q gekennzeichneten Sende-/Empfangsbereich der Mobilfunk-Basisstation 100 des einen schnurlosen Telefons 25 eindringt.

Im Normalbetrieb - wie er oben beschrieben ist - ist keine Sprach- und/oder Datenübertragung zwischen dem weiteren Mobilteil 140*'* und der einen Mobilfunk-Basisstation 100 des einen schnurlosen Telefons 25 möglich, und zwar deshalb nicht, weil die Zugangsberechtigung bzw. die Kennung K*'* des weiteren Mobilteils 140*'* nicht in dem Speicher 120 der einen Mobilfunk-Basisstation 100 hinterlegt ist. Im Normalbetrieb wird also die Mobilfunk-Basisstation 100 die Kommunikation bzw. die Sprach- und/oder Datenübertragung mit dem weiteren Mobilteil 140*'* abbrechen bzw. gar nicht erst zulassen. Um dies aber zu vermeiden, sind die Steuereinrichtungen 110 und 110*'* derart ausgestaltet, daß ein Austausch der Zugangsberechtigungsdaten für eine Roaming- bzw. Hand-over-Funktion durchgeführt wird. Dies soll nachfolgend beschrieben werden.

Austausch der Zugangsberechtigungsdaten für eine "Hand-over"- bzw. Roaming-Funktion:
Um zu erreichen, daß das weitere Mobilteil 140*'* auch im Sendebereich Q des einen schnurlosen Telefons 25 weiter betrieben werden kann, tauschen die beiden Steuereinrichtungen 110 und 110*'* ihre jeweils abgespeicherten Zugangsberechtigungs-Datensignale Da und Db untereinander aus, und zwar über das Datenverarbeitungsgerätenetzwerk 20. Dies ist in der Figur durch Angabe der Bezugszeichen Da und Db gekennzeichnet; dabei bezeichnet das Bezugszeichen Da die Zugangsberechtigungs-Datensignale der einen Mobilfunk-Basisstation 100 und das Bezugszeichen Db die Zugangsberechtigungs-Datensignale der weiteren Mobilfunk-Basisstation 100*'*. Der Austausch dieser Zugangsberechtigungs-Datensignale Da und Db kann auf verschiedene Weise erfolgen; so ist es beispielsweise denkbar, daß der Austausch der Datensignale Da und Db in zeitlich regelmäßigen Abständen erfolgt, so daß - von Datensatzveränderungen zwischen zwei Übertragungszyklen abgesehen - quasi ein einheitlicher Zugangsberechtigungs-Datensatz in jeder der beiden Mobilfunk-Basisstationen 100 und 100*'* vorhanden ist. Statt dessen kann der Datenaustausch auch anders erfolgen, und zwar derart, daß nach einem ersten erfolgten Datenaustausch weitere Zugangsberechtigungs-Datensignale ausschließlich dann ausgetauscht werden, wenn eine Veränderung der Zugangsberechtigung bzw. eine Veränderung der in einem der beiden Speicher 120 bzw. 120*'* abgespeicherten Zugangsberechtigungs-Datensignale aufgetreten ist.

Wird ein einheitlicher Zugangsberechtigungs-Datensatz in jeder der beiden Mobilfunk-Basisstationen 100 und 100*'* nicht als erforderlich angesehen, so ist es ebenfalls möglich, daß der Datenaustausch nur auf Anfrage einer der Mobilfunk-Basisstationen vonstatten geht; gelangt beispielsweise das weitere Mobilteil 140*'* in den Sendebereich Q des einen schnurlosen Telefons 25, so wird die Steuereinrichtung 110 der einen Mobilfunk-Basisstation 100 feststellen, daß das weitere Mobilteil 140' keine Zugangsberechtigung aufweist, nämlich deshalb, weil kein der Kennung K' des weiteren Mobilteils 140' entsprechendes Zugangsberechtigungs-Datensignal Db in dem einen Speicher 120 der einen Mobilfunk-Basisstation 100 abgespeichert ist. In einem solchen Fall erzeugt die eine Mobilfunk-Basisstation 100 ein Anfragesignal Dk und übermittelt dieses über das Datenverarbeitungsgerätenetzwerk 20 - d.h. also über das eine Datenverarbeitungs-Gerät 21, die Daten und/oder Signalleitungen 23 sowie das weitere Datenverarbeitungs-Gerät 22 - an die weitere Mobilfunk-Basisstation 100' des weiteren schnurlosen Telefons 30. Dieses Anfragesignal Dk enthält die Kennung K' des weiteren Mobilteils 140' beispielsweise in verschlüsselter Form und einen vorgegebenen Befehls-Kode; dieser Befehls-Kode signalisiert der weiteren Mobilfunk-Basisstation 100', daß sie prüfen soll, ob das weitere Mobilteil 140' mit der Kennung K' bei ihr zugelassen ist. Gelangt dieses Anfragesignal Dk mit der Kennung K' zur weiteren Steuereinrichtung 110' der weiteren Mobilfunk-Basisstation 100', so prüft diese also, ob zu der Kennung K' eine entsprechende Zugangsberechtigung bzw. ein entsprechendes Zugangsberechtigungs-Datensignal in ihrem weiteren Speicher 120' abgespeichert ist. Ist dies der Fall, so wird die weitere Steuereinrichtung 100' der weiteren Mobilfunk-Basisstation 100' ein entsprechendes Bestätigungssignal FK erzeugen, das bestätigt, daß für die Kennung K' eine Zugangsberechtigung vorliegt; dieses Bestätigungssignal wird zu der einen Mobilfunk-Basisstation 100 übertragen. Andernfalls, falls also kein entsprechendes Zugangsberechtigungs-Datensignal abgespeichert sein sollte, wird statt des Bestätigungssignals Fk ein Sperrsignal erzeugt und an die eine Mobilfunk-Basisstation 100 übermittelt; dieses Sperrsignal gibt dann an, daß keine Zugangsberechtigung in dem weiteren Speicher 120' vorliegt.

Nachdem die eine Steuereinrichtung 110 der einen Mobilfunk-Basisstation 100 das Freigabesignal FK empfangen hat, speichert es eine die entsprechende Kennung K' des Mobilteils 140*'* angebende Zugangsberechtigung in Form eines Zugangsberechtigungs-Datenelements Db*'* in ihrem Speicher 120 ab und erlaubt anschließend die Kommunikation bzw. die Sprachund/oder Datenübertragung zwischen der einen Mobilfunk-Basisstation 100 und dem weiteren Mobilteil 140*'*.

Zur Durchführung des Austauschs der für Hand-over- bzw. Roaming-Funktion erforderlichen Zugangsberechtigungsdaten müssen die beiden Steuereinrichtungen 110 und 110*'* also entsprechend ausgestaltet sein; dies läßt sich bei dem Ausführungsbeispiel gemäß der Figur in einfacher Weise durch eine entsprechende Programmierung der beiden Mikroprozessoren 115 und 115*'* erreichen. Darüber hinaus müssen die Datenverarbeitungs-Geräte 21 und 22 derart programmmiert sein, daß sie die Signale Da, Db, Dk und Fk der Mobilfunk-Basisstationen wie beschrieben über das Datenverarbeitungsgerätenetzwerk weiterleiten.

Im übrigen ist es auch möglich, daß die Mobilfunk-Basisstationen direkt an die Daten- und/oder Signalleitungen 23 des Datenverarbeitungsgerätenetzwerks 20 angeschlossen werden; dies setzt dann voraus, daß der Schnittstellenanschluß S100 der Mobilfunk-Basisstationen zum Anschluß an die Daten- und/oder Signalleitungen 23 des Datenverarbeitungsgerätenetzwerks 20 geeignet ist.

Zusammenfassend wird bei der beschriebenen Anordnung also erreicht, daß jedes der beiden Mobilteile 140 bzw. 140*'* mit jeder der beiden Mobilfunk-Basisstationen 100 bzw. 100*'* kommunizieren kann, obwohl beide Mobilteile ausschließlich bei jeweils einer der beiden Mobilfunk-Basisstationen angemeldet sind; ein Anmelden jedes der beiden Mobilteile bei jeder der beiden Mobilfunk-Basisstationen von Hand" ist also bei der Anordnung gemäß der Figur nicht erforderlich.

## Patentansprüche

1. Anordnung mit mindestens zwei ortsfesten, an ein zellulares Mobilkommunikationsnetz angeschlossenen Mobilfunk-Basisstationen (100,100*'*), die zur Sprach- und/oder Datenübertragung mit allen denjenigen mobilen Telefonendgeräten (140, 140') - nachfolgend Mobilteile genannt - bereit sind, deren Zugangsberechtigung geprüft und als richtig erkannt ist, wobei jede der Mobilfunk-Basisstationen (100, 100*'*) zum Prüfen der Zugangsberechtigung jeweils eine einen Speicher (120, 120*'*) enthaltende Steuereinrichtung (110, 110*'*) aufweist,
**dadurch gekennzeichnet,**
- **daß** die Anordnung ein dezentrales Datenverarbeitungsgerätenetzwerk (20) aufweist, das durch mehrere untereinander mit Daten- und/oder Signalleitungen verbundene Datenverarbeitungsgeräte gebildet ist, und
- **daß** die mindestens zwei Mobilfunk-Basisstationen (100, 100*'*) jeweils an das Datenverarbeitungsgerätenetzwerk angeschlossen sind,
- wobei die Steuereinrichtungen derart ausgestaltet sind, daß
- unter Benutzung der Daten- und/oder Signalleitungen des Datenverarbeitungsgerätenetzwerks (20) die in ihrem jeweiligen Speicher (120, 120*'*) abgespeicherten Zugangsberechtigungs-Datensignale (Da, Db) den Steuereinrichtungen (110, 110*'*) der übrigen Mobilfunk-Basisstationen (100, 100*'*) zum Auswerten verfügbar sind
- und die Steuereinrichtungen auf Zugangsberechtigungs-Datensignale (Da, Db) der übrigen Mobilfunk-Basisstationen (100, 100') Zugriff haben und
- die Steuereinrichtungen die Sprach- und/oder Datenübertragung der eigenen Mobilfunk-Basisstation (100, 100*'*) jeweils mit jedem Mobilteil (140,140*'*) zulassen, dessen Kennung (K) als Zugangsberechtigungs-Datensignal (Da, Db) in dem eigenen Speicher (120, 120*'*) oder in mindestens einem der Speicher der anderen Mobilfunk-Basisstationen hinterlegt ist, deren Zugangsberechtigung geprüft und als richtig erkannt ist.

2. Anordnung nach Anspruch 1,
**dadurch gekennzeichnet, daß**
- die Steuereinrichtungen (110, 110*'*) der Mobilfunk-Basisstationen derart ausgestaltet sind, daß sie die Zugangsberechtigungs-Datensignale über die Daten-und/oder Signalleitungen des Datenverarbeitungsgerätenetzwerks (20) untereinander austauschen unter Bildung eines einheitlichen Zugangsberechtigungs-Datensatzes in jeder der Mobilfunk-Basisstationen.

3. Anordnung nach Anspruch 2,
**dadurch gekennzeichnet, daß**
- die Steuereinrichtungen (110, 110*'*) der Mobilfunk-Basisstationen derart ausgestaltet sind, daß sie die Zugangsberechtigungs-Datensignale in regelmäßigen zeitlichen Abständen austauschen.

4. Anordnung nach Anspruch 2,
**dadurch gekennzeichnet, daß**
- die Steuereinrichtungen (110, 110*'*) der Mobilfunk-Basisstationen derart ausgestaltet sind, daß sie nach einem ersten erfolgten Datenaustausch weitere Zugangsberechtigungs-Datensignale ausschließlich dann austauschen, wenn eine Veränderung der Zugangsberechtigung aufgetreten ist.

5. Anordnung nach Anspruch 1,
**dadurch gekennzeichnet, daß**
- die Steuereinrichtungen (110, 110*'*) der Mobilfunk-Basisstationen derart ausgestaltet sind, daß sie die in ihrem jeweiligen Speicher hinterlegten Zugangsberechtigungs-Datensignale jeweils ausschließlich auf Anfrage anderer Mobilfunk-Basisstationen an diese weiterleiten.

6. Mobilfunk-Basisstation (110, 110*'*) zum Anschluß an ein zellulares Mobilkommunikationsnetz (20) mit:
- mindestens einer Funkeinrichtung (135, 135*'*) zur Sprachund/oder Datenübertragung und
- mindestens einer die Funkeinrichtung (135, 135*'*) ansteuernden und einen Speicher (120, 120*'*) aufweisenden Steuereinrichtung, die die Sprach- und/oder Datenübertragung mit allen denjenigen mobilen Telefonendgeräten (140,140*'*) zuläßt, die eine in dem Speicher (120, 120*'*) der Steuereinrichtung (110, 110*'*) abgespeicherte Kennung (K) aufweisen,
**dadurch gekennzeichnet,**
- **daß** die Mobilfunk-Basisstation einen Schnittstellenanschluß zum Anschluß an ein dezentrales Datenverarbeitungsgerätenetzwerk aufweist und
- **daß** die Steuereinrichtung (110, 110*'*) derart beschaffen ist, daß sie
- unter Benutzung von Daten- und/oder Signalleitungen des Datenverarbeitungsgerätenetzwerks (20)
- einerseits die in ihrem Speicher (120, 120*'*) abgespeicherten Zugangsberechtigungs-Datensignale (Da, Db) anderen an das Datenverarbeitungsgerätenetzwerk (20) angeschlossenen Mobilfunk-Basisstationen (100, 100') verfügbar macht und
- andererseits auf Zugangsberechtigungs-Datensignale (Da, Db) der anderen Mobilfunk-Basisstationen (100, 100*'*) Zugriff hat und
- die Sprach- und/oder Datenübertragung jeweils zusätzlich auch mit jedem anderen Mobilteil (140, 140*'*) zuläßt, dessen Zugangsberechtigung in mindestens einem Speicher (120, 120*'*) der anderen Mobilfunk-Basisstationen abgespeichert ist, deren Zugangsberechtigung geprüft und als richtig erkannt ist.

7. Mobilfunk-Basisstation nach Anspruch 6,
**dadurch gekennzeichnet, daß**
- die Steuereinrichtung (110, 110*'*) derart ausgestaltet ist, daß sie die Zugangsberechtigungs-Datensignale über die Daten- und/oder Signalleitungen des Datenverarbeitungsgerätenetzwerks mit den anderen Mobilfunk-Basisstationen austauscht unter Bildung eines einheitlichen Zugangsberechtigungs-Datensatzes in jeder der Mobilfunk-Basisstationen.

8. Mobilfunk-Basisstation nach Anspruch 7,
**dadurch gekennzeichnet, daß**
- die Steuereinrichtung (110, 110*'*) derart ausgestaltet ist, daß sie die Zugangsberechtigungs-Datensignale in regelmäßigen zeitlichen Abständen austauscht.

9. Mobilfunk-Basisstation nach Anspruch 7,
**dadurch gekennzeichnet, daß**
- die Steuereinrichtung (110, 110*'*) derart ausgestaltet ist, daß sie nach einem ersten erfolgten Datenaustausch weitere Zugangsberechtigungs-Datensignale ausschließlich dann austauscht, wenn eine Veränderung der Zugangsberechtigung aufgetreten ist.

10. Mobilfunk-Basisstation nach Anspruch 6,
**dadurch gekennzeichnet, daß**
- die Steuereinrichtung (110, 110*'*) derart ausgestaltet ist, daß sie die in ihrem Speicher hinterlegten Zugangsberechtigungs-Datensignale ausschließlich auf Anfrage anderer Mobilfunk-Basisstationen an diese weiterleitet.

11. Verfahren zum Betrieb einer Anordnung mit einem. zellularen Mobilkommunikationsnetz, einem durch mehrere untereinander mit Daten- und/oder Signalleitungen verbundene Datenverarbeitungsgeräte gebildeten dezentralen Datenverarbeitungsgerätenetzwerk (20) und mindestens zwei ortsfesten Mobilfunk-Basisstationen (100,100*'*), die jeweils an das zellulare Mobilkommunikationsnetz und an das dezentrale Datenverarbeitungsgerätenetzwerk (20) angeschlossen sind, wobei bei dem Verfahren
- jede Mobilfunk-Basisstation (100, 100*'*) derart betrieben wird,
- daß sie unter Benutzung der Daten- und/oder Signalleitungen des dezentralen Datenverarbeitungsgerätenetzwerks (20) in ihrem jeweiligen Speicher (120, 120*'*) abgespeicherte Zugangsberechtigungs-Datensignale (Da, Db) der mindestens einen anderen Mobilfunk-Basisstation (100, 100*'*) zum Auswerten zur Verfügung stellt und auf Zugangsberechtigungs-Datensignale (Da, Db) der mindestens einen anderen Mobilfunk-Basisstation (100, 100*'*) zugreift und
- daß sie die Sprach- und/oder Datenübertragung jeweils mit jedem mobilen Telefonendgerät (140, 140') zuläßt, dessen Zugangsberechtigung in dem eigenen Speicher oder in dem Speicher der mindestens einen anderen Mobilfunk-Basisstation hinterlegt ist.

12. Verfahren nach Anspruch
**dadurch gekennzeichnet, daß**
- die Zugangsberechtigungs-Datensignale der Mobilfunk-Basisstationen über die Daten-und/oder Signalleitungen des Datenverarbeitungsgerätenetzwerks untereinander ausgetauscht werden unter Bildung eines einheitlichen Zugangsberechtigungs-Datensatzes in jeder der Mobilfunk-Basisstationen.

13. Verfahren nach Anspruch 12,
**dadurch gekennzeichnet, daß**
- die Zugangsberechtigungs-Datensignale in regelmäßigen zeitlichen Abständen ausgetauscht werden.

14. Verfahren nach Anspruch 12,
**dadurch gekennzeichnet, daß**
- nach einem ersten erfolgten Datenaustausch weitere Zugangsberechtigungs-Datensignale ausschließlich dann ausgetauscht werden, wenn eine Veränderung der Zugangsberechtigung aufgetreten ist.

15. Verfahren nach Anspruch 11,
**dadurch gekennzeichnet, daß**
- Zugangsberechtigungs-Datensignale ausschließlich auf Anfrage anderer Mobilfunk-Basisstationen an diese weitergeleitet werden.

## Claims

1. Arrangement having at least two stationary mobile radio base stations (100, 100') which are connected to a cellular mobile communication network and are provided for speech and/or data transmission to all those mobile telephone terminals (140, 140') - referred to as mobile parts in the following text - whose access authorization has been checked and has been identified as being correct, with each of the mobile radio base stations (100, 100') having a respective control device (110, 110'), which contains a memory (120, 120'), for checking the access authorization,
**characterized**
- **in that** the arrangement has a local data processing appliance network (20) which is formed by two or more data processing appliances that are connected to one another by means of data and/or signal lines, and
- **in that** the at least two mobile radio base stations (100, 100') are each connected to the data processing appliance network,
- with the control devices being designed such that:
- the access authorization data signals (Da, Db) which are stored in their respective memory (120, 120') are available to the control devices (110, 110') in the other mobile radio base stations (100, 100') for evaluation using the data and/or signal lines of the data processing appliance network (20),
- and the control devices have access to access authorization data signals (Da, Db) for the other mobile radio base stations (100, 100'), and
- the control devices allow speech and/or data transmission from their own mobile radio base station (100, 100') to the respective mobile part (140, 140') whose identification (K) is stored as an access authorization data signal (Da, Db) in its own memory (120, 120') or in at least one of the memories of the other mobile radio base stations whose access authorization has been checked and has been identified as being correct.

2. Arrangement according to Claim 1,
**characterized in that**
- the control devices (110, 110') in the mobile radio base stations are designed such that they interchange the access authorization data signals with one another via the data and/or signal lines in the data processing appliance network (20), forming a standard access authorization data record in each of the mobile radio base stations.

3. Arrangement according to Claim 2,
**characterized in that**
- the control devices (110, 110') in the mobile radio base stations are designed such that they interchange the access authorization data signals at regular time intervals.

4. Arrangement according to Claim 2,
**characterized in that**
- the control devices (110, 110') in the mobile radio base stations are designed such that, once a first data interchange has taken place, they interchange further access authorization data signals only when a change to the access authorization has occurred.

5. Arrangement according to Claim 1,
**characterized in that**
- the control devices (110, 110') in the mobile radio base stations are designed such that they in each case pass on the access authorization data signals (which are stored in their respective memory) to other mobile radio base stations only when requested by the latter.

6. Mobile radio base station (110, 110') for connection to a cellular mobile communication network (20) having:
- at least one radio device (135, 135') for speech and/or data transmission, and
- at least one control device, which drives the radio device (135, 135') has a memory (120, 120') and allows speech and/or data transmission to all those mobile telephone terminals (140, 140') which have an identification (K) stored in the memory (120, 120') of the control device (110, 110'),
**characterized**
- **in that** the mobile radio base station has an interface connection for connection to a local data processing appliance network, and
- **in that** the control device (110, 110') is designed such that
- using data and/or signal lines in the data processing appliance network (20)
- it on the one hand makes available the access authorization data signals (Da, Db) which are stored in its memory (120, 120') to other mobile radio base stations (100, 100') which are connected to the data processing appliance network (20), and
- on the other hand, it has access to access authorization data signals (Da, Db) from the other mobile radio base stations (100, 100'), and
- it in each case also allows speech and/or data transmission to every other mobile part (140, 140') whose access authorization is stored in at least one memory (120, 120') in the other mobile radio base stations whose access authorization has been checked and has been identified as being correct.

7. Mobile radio base station according to Claim 6,
**characterized in that**
- the control device (110, 110') is designed such that it interchanges the access authorization data signals via the data and/or signal lines in the data processing appliance network with the other mobile radio base stations, forming a standard access authorization data record in each of the mobile radio base stations.

8. Mobile radio base station according to Claim 7,
**characterized in that**
- the control device (110, 110') is designed such that it interchanges the access authorization data signals at regular time intervals.

9. Mobile radio base station according to Claim 7,
**characterized in that**
- the control device (110, 110') is designed such that, after a first data interchange has taken place, it interchanges further access authorization data signals only when a change to the access authorization has occurred.

10. Mobile radio base station according to Claim 6,
**characterized in that**
- the control device (110, 110') is designed such that it in each case passes on the access authorization data signals (which are stored in its respective memory) to other mobile radio base stations only when requested by the latter.

11. Method for operation of an arrangement having a cellular mobile communication network, a local data processing appliance network (20) which is formed by two or more data processing appliances that are connected to one another by means of data and/or signal lines, and having at least two stationary mobile radio base stations (100, 100') which are each connected to the cellular mobile communication network and to the local data processing appliance network (20), with, in the case of the method:
- each mobile radio base station (100, 100') being operated such that,
- using the data and/or signal lines in the local data processing appliance network (20) it makes available to the at least one other mobile radio base station (100, 100') access authorization data signals (Da, Db) (which are stored in its respective memory (120, 120')) for evaluation and accesses access authorization data signals (Da, Db) of the at least one other mobile radio base station (100, 100') and
- it allows speech and/or data transmission with each respective mobile telephone terminal (140, 140') whose access authorization is stored in its own memory or in the memory of the at least one other mobile radio base station.

12. Method according to Claim 11,
**characterized in that**
- the access authorization data signals for the mobile radio base stations are interchanged with one another via the data and/or signal lines in the data processing appliance network, forming a standard access authorization data record in each of the mobile radio base stations.

13. Method according to Claim 12,
**characterized in that**
- the access authorization data signals are interchanged at regular time intervals.

14. Method according to Claim 12,
**characterized in that**
- once a first data interchange has taken place, further access authorization data signals are interchanged only when a change to the access authorization has occurred.

15. Method according to Claim 11,
**characterized in that**
- access authorization data signals are passed on to other mobile radio base stations only when requested by the latter.

## Revendications

1. Dispositif comportant au moins deux stations de base de radiocommunication mobile (100, 100') fixes qui sont raccordées à un réseau de télécommunication cellulaire et qui sont aptes à la transmission de paroles et/ou de données avec tous ceux des terminaux téléphoniques mobiles (140, 140') - appelés ci-dessous parties mobiles - dont l'autorisation d'accès est vérifiée et reconnue comme correcte, chacune des stations de base de radiocommunication mobile (100, 100') comportant alors un dispositif de commande (110, 110') contenant une mémoire (120, 120') pour la vérification de l'autorisation d'accès,
**caractérisé par le fait que**
- le dispositif comporte un réseau d'ordinateurs (20) décentralisé qui est formé par plusieurs ordinateurs reliés entre eux avec des lignes de données et/ou de signaux, et
- les deux ou plus stations de base de radiocommunication mobile (100, 100') sont raccordées à chaque fois au réseau d'ordinateurs, les dispositifs de commande étant conçus de telle sorte que
- en utilisant les lignes de données et/ou de signaux du réseau d'ordinateurs (20), ils mettent les signaux de données d'autorisation d'accès (Da, Db) mémorisés dans leur mémoire particulière (120, 120') à la disposition des dispositifs de commande (110, 110') des autres stations de base de radiocommunication mobile (100, 100') en vue de leur évaluation,
- et les dispositifs de commande ont accès à des signaux de données d'autorisation d'accès (Da, Db) des autres stations de base de radiocommunication mobile (100, 100'), et
- les dispositifs de commande autorisent la transmission de paroles et/ou de données de la station de base de radiocommunication mobile considérée (100, 100') à chaque fois avec toute partie mobile (140, 140') dont l'identificateur (K) est mémorisé comme signal de données d'autorisation d'accès (Da, Db) dans la mémoire particulière (120, 120') de la station de base considérée ou dans au moins l'une des mémoires des autres stations de base de radiocommunication mobile c'est-à-dire dont l'autorisation d'accès est vérifiée et reconnue comme correcte.

2. Dispositif selon la revendication 1, **caractérisé par le fait que** les dispositifs de commande (110, 110') des stations de base de radiocommunication mobile sont conçus de telle sorte qu'ils échangent entre eux les signaux de données d'autorisation d'accès par l'intermédiaire des lignes de données et/ou de signaux du réseau d'ordinateurs (20) en formant un ensemble uniforme de données d'autorisation d'accès dans chacune des stations de base de radiocommunication mobile.

3. Dispositif selon la revendication 2, **caractérisé par le fait que** les dispositifs de commande (110, 110') des stations de base de radiocommunication mobile sont conçus de telle sorte qu'ils échangent les signaux de données d'autorisation d'accès à intervalles de temps réguliers.

4. Dispositif selon la revendication 2, **caractérisé par le fait que** les dispositifs de commande (110, 110') des stations de base de radiocommunication mobile sont conçus de telle sorte que, après un premier échange de données, ils n'échangent d'autres signaux de données d'autorisation d'accès que si une modification de l'autorisation d'accès a eu lieu.

5. Dispositif selon la revendication 1, **caractérisé par le fait que** les dispositifs de commande (110, 110') des stations de base de radiocommunication mobile sont conçus de telle sorte qu'ils ne retransmettent les signaux de données d'autorisation d'accès mémorisés dans leur mémoire respective à d'autres stations de base de radiocommunication mobile qu'à la demande de celles-ci.

6. Station de base de radiocommunication mobile (110, 110') pour le raccordement à un réseau de communication mobile (40) cellulaire, comportant :
- au moins un dispositif radio (135, 135') pour la transmission de paroles et/ou de données et
- au moins un dispositif de commande qui commande le dispositif radio (135, 135') et comporte une mémoire (120, 120') et qui autorise la transmission de paroles et/ou de données avec tous ceux des terminaux téléphoniques mobiles (140, 140') qui ont un identificateur (K) mémorisé dans la mémoire (120, 120') du dispositif de commande (110, 110'),
**caractérisée par le fait que**
- les stations de base de radiocommunication mobile comportent une connexion d'interface pour le raccordement à un réseau d'ordinateurs décentralisé et
- que le dispositif de commande (110, 110') est conçu de telle sorte que
- en utilisant des lignes de données et/ou de signaux du réseau d'ordinateurs (20),
- d'une part il met les signaux de données d'autorisation d'accès (Da, Db) mémorisés dans sa mémoire (120, 120') à la disposition d'autres stations de base de radiocommunication mobile (100, 100') raccordées au réseau d'ordinateurs (20) et
- d'autre part il accède à des signaux de données d'autorisation d'accès (Da, Db) des autres stations de base de radiocommunication mobile (100, 100') et
- il autorise la transmission de paroles et/ou de données à chaque fois en plus à toute autre partie mobile (140, 140') dont l'autorisation d'accès est mémorisée dans au moins une mémoire (120, 120') des autres stations de base de radiocommunication mobile c'est-à-dire dont l'autorisation d'accès est vérifiée et reconnue comme correcte.

7. Station de base de radiocommunication mobile selon la revendication 6, **caractérisée par le fait que** le dispositif de commande (110, 110') est conçu de telle sorte qu'il échange les signaux de données d'autorisation d'accès par l'intermédiaire des lignes de données et/ou de signaux du réseau d'ordinateurs avec d'autres stations de base de radiocommunication mobile en formant un ensemble uniforme de données d'autorisation d'accès dans chacune des stations de base de radiocommunication mobile.

8. Station de base de radiocommunication mobile selon la revendication 7, **caractérisée par le fait que** le dispositif de commande (110, 110') est conçu de telle sorte qu'il échange les signaux de données d'autorisation d'accès à intervalles de temps réguliers.

9. Station de base de radiocommunication mobile selon la revendication 7, **caractérisée par le fait que** le dispositif de commande (110, 110') est conçu de telle sorte que, après un premier échange de données, il n'échange d'autres signaux de données d'autorisation d'accès que si une modification de l'autorisation d'accès a eu lieu.

10. Station de base de radiocommunication mobile selon la revendication 6, **caractérisée par le fait que** le dispositif de commande (110; 110') est conçu de telle sorte qu'il ne retransmet les signaux de données d'autorisation d'accès mémorisés dans sa mémoire à d'autres stations de base de radiocommunication mobile qu'à la demande de celles-ci.

11. Procédé pour l'exploitation d'un dispositif comportant un réseau de communication mobile cellulaire, un réseau d'ordinateurs (20) décentralisé formé par plusieurs ordinateurs reliés entre eux avec des lignes de données et/ou de signaux et au moins deux stations de base de radiocommunication mobile (100, 100') fixes qui sont raccordées à chaque fois au réseau de communication mobile cellulaire et au réseau d'ordinateurs (20) décentralisé,
- chaque station de base de radiocommunication mobile (100, 100') étant exploitée dans le procédé de telle sorte que
- en utilisant les lignes de données et/ou de signaux du réseau d'ordinateurs (20) décentralisé, elle met les signaux de données d'autorisation d'accès (Da, Db) mémorisés dans sa mémoire respective (120, 120') à la disposition de la ou des autres stations de base de radiocommunication mobile (100, 100') en vue de leur évaluation et elle accède à des signaux de données d'autorisation d'accès (Da, Db) de la ou des autres stations de base de radiocommunication mobile (100, 100') et
- elle autorise la transmission de paroles et/ou de données à chaque fois avec tout terminal téléphonique mobile (140, 140') dont l'autorisation d'accès est mémorisée dans sa mémoire particulière ou dans la mémoire de l'autre ou des autres stations de base de radiocommunication mobile.

12. Procédé selon la revendication 11, **caractérisé par le fait qu'**on échange les signaux de données des stations de base de radiocommunication mobile par l'intermédiaire des lignes de données et/ou de commande du réseau d'ordinateurs en formant un ensemble uniforme de données d'autorisation d'accès dans chacune des stations de base de radiocommunication mobile.

13. Procédé selon la revendication 12, **caractérisé par le fait qu'**on échange les signaux de données d'autorisation d'accès à intervalles de temps réguliers.

14. Procédé selon la revendication 12, **caractérisé par le fait que**, après un premier échange de données, on n'échange d'autres signaux de données d'autorisation d'accès que si une modification de l'autorisation d'accès a eu lieu.

15. Procédé selon la revendication 11, **caractérisé par le fait qu'**on ne retransmet des signaux de données d'autorisation d'accès à d'autres stations de base de radiocommunication mobile qu'à la demande de celles-ci.
